# EUROPEAN PATENT SPECIFICATION

(11) **EP 1 969 883 B1**
(45) Date of publication and mention of the grant of the patent: **01.07.2009**
(21) Application number: 06824341.9
(22) Date of filing: 17.11.2006
(51) Int. Cl.: H04W 4/00

(54) **METHOD, SUBSCRIBER IDENTITY MODULE AND SYSTEM FOR PROVIDING MOBILE COMMUNICATION TERMINAL LOCATION DATA**
VERFAHREN, TEILNEHMERIDENTITÄTSMODUL UND SYSTEM ZUR BEREITSTELLUNG VON MOBILKOMMUNIKATIONSGERÄT-ORTSDATEN
PROCEDE, MODULE D'IDENTITE D'ABONNE ET SYSTEME POUR FOURNIR DES DONNEES DE LOCALISATION D'UN TERMINAL DE COMMUNICATION MOBILE

(30) Priority: 12.12.2005 NO 20055897
(43) Date of publication of application: 17.09.2008
(73) Proprietor: Telenor ASA, 1331 Fornebu (NO)
(72) Inventor: BREDE, Steinar, N-7048 Trondheim (NO); JAKOBSSON, Sune, N-7550 Hommelvik (NO)
(74) Representative: Onsagers Ltd
(86) International application number: PCT/NO2006/000420
(87) International publication number: WO 2007/069901

(56) References cited:
- WO-A-98/58509
- WO-A-20/05096651
- FR-A1- 2 820 597
- US-A1- 2005 136 845

## Description

### Technical field

The present invention relates in general to mobile and wireless communication technology.

More specifically, the invention relates to a method for providing mobile communication terminal location data. The invention also relates to a subscriber identity module which includes a processing device that is configured for executing such a method. Finally, the invention relates to a system wherein the method is used.

### Background of the invention

Many approaches have previously been suggested for the problem of locating or detecting the presence of mobile communication terminals operating in wireless communication systems. Such prior art approaches include cell-based methods for cellular systems (i.a., cell of origin and, time of arrival methods) and GPS-based methods.

A recent, alternative approach for localizing a mobile communication terminal is known as the Place Lab system, suggested by Intel Corp., described in Technology@Intel Magazine, Oct. 2005 (http://www.intel.com/technology/magazine/research/place-lab-1005.pdf). In this system, a mobile communication terminal, such as a WLAN-enabled PDA, is arranged to localize itself by listening for WLAN access points. The mobile communication terminal derives identification data, such as the MAC address, of each radio beacon, looks up the associated beacon's position in a database, and estimates its own position, referenced to the positions of the beacons. The Place Lab system relies on pre-registered position data of the WLAN access points, recorded during an error prone registration process.

Disadvantages of the Place Lab system are that it involves extensive user interaction and low degree of portability. Further, it is not particularly suitable for determining the location of regular mobile telephones, which are generally not equipped with means for WLAN communication. Also, the Place lab system lacks quality assurance of the pre-registered location information. It also lacks inherent mechanisms for privacy control.

A subscriber identity module, or SIM card, is a removable smart card module for use with mobile communication terminals, such as GSM mobile telephones. The SIM card contains subscriber specific data and is, in use, operatively accessible by the central processing unit of the mobile terminal. The SIM card typically also comprises features for authenticating a user/subscriber. The SIM card includes a processing unit, a memory device and I/O devices for communication with the processing unit of the mobile terminal. The memory device contains a subscriber authentication key and computer program instructions for causing the SIM card processing unit to authenticate the user/subscriber.

WO-2005/096651 relates to a subscriber identity module for a mobile communication terminal, the module including an interrogatable RFID transponder which is operatively controllable by the processing device in the subscriber identity module. The subscriber identification module may be used as an authentication token, i.e. for a access control system.

### Summary of the invention

An objective of the present invention is to provide a method, a subscriber identification module and a system for providing mobile communication terminal location data.

In accordance with the present invention there is provided a method, a device and a system as set forth in the appended independent claims.

Further advantageous embodiments of the invention are set forth in the dependent claims.

A feature of the present invention is that the method is executed by the processing device included in the subscriber identity module, rather than by any other processing device included in the mobile communication terminal. This feature implies that several major advantages are achieved. Firstly, the entire process may be hidden to the user of the mobile communication terminal, and consequently, unnecessary or undesired user interaction may be reduced or eliminated. Secondly, portability is achieved, i.e. the services provided by the method will follow the user's mobile communication subscription when changing from one physical mobile communication terminal to another. Thirdly, strong mechanisms for privacy control are achieved.

Additional features and principles of the present invention will be recognized from the detailed description below.

It is to be understood that both the foregoing general description and the following detailed description are exemplary and explanatory only and are not restrictive of the invention as claimed.

### Brief description of the drawings

The accompanying drawings illustrate a preferred embodiment of the invention. In the drawings,
Fig. 1 is a schematic block diagram illustrating a system according to the invention,
Fig. 2 is a schematic flowchart illustrating a method according to a first embodiment of the invention,
Fig. 3 is a schematic flowchart illustrating a method according to a second embodiment of the invention, and
Fig. 4 is a schematic block diagram illustrating a subscriber identity module in accordance with the invention.

### Detailed description of the invention

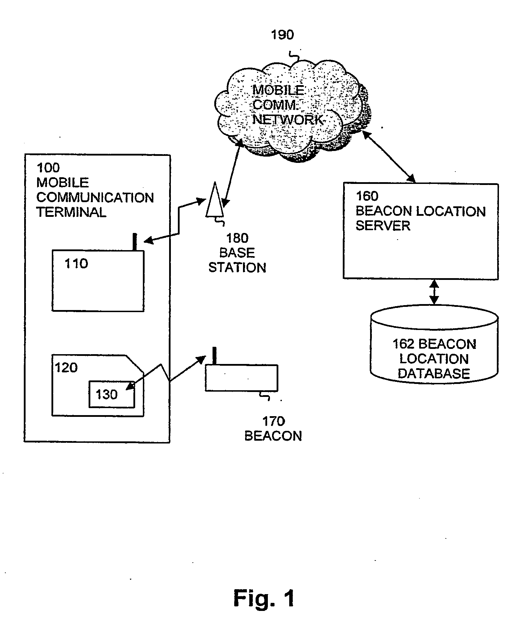

Fig. 1 is a schematic block diagram illustrating a system according to the invention.

A mobile communication terminal 100 comprises a mobile communication module 110 operatively connected to a mobile communication antenna. The mobile communication module 110 and the antenna enable the mobile communication terminal 100 to communicate with a base station 180 in a mobile communication network 190.

The mobile communication module 110 is typically a GSM/GPRS enabled mobile communication module. Thus, the mobile communication terminal 100 may be a GSM/GPRS enabled mobile telephone, a PDA, a palmtop/notebook computer, or the like. Correspondingly, the base station 180 is typically a GSM/GPRS enabled base station and the mobile communication network 190 is typically a GSM/GPRS enabled mobile communication network.

A beacon location server 160 is operatively connected to the mobile communication network 190. The server 160 is further operatively connected to a beacon location database or at least a data storage 162, which contains information on at least one beacon, and preferably several beacons, identified by their identification data (such as MAC addresses) and location data associated with each beacon identification data.

The beacon location server 160 is arranged for receiving a beacon location request from a mobile communication terminal operating in the mobile communication network, e.g. by a message such as an SMS or a hidden SMS.

Alternatively, the beacon location request is received as a request command transmitted by a GPRS connection.

The server is further arranged to derive beacon identification data from the request, and to look up in the database or data storage 162 the location data that is associated with the beacon identification data. Finally, the server is arranged for transmitting the location data back to the requesting mobile communication terminal, e.g. by means of a message (SMS, hidden SMS).

Alternatively the server is arranged for transmitting the location data back to the requesting mobile communication terminal by means of a GPRS connection.

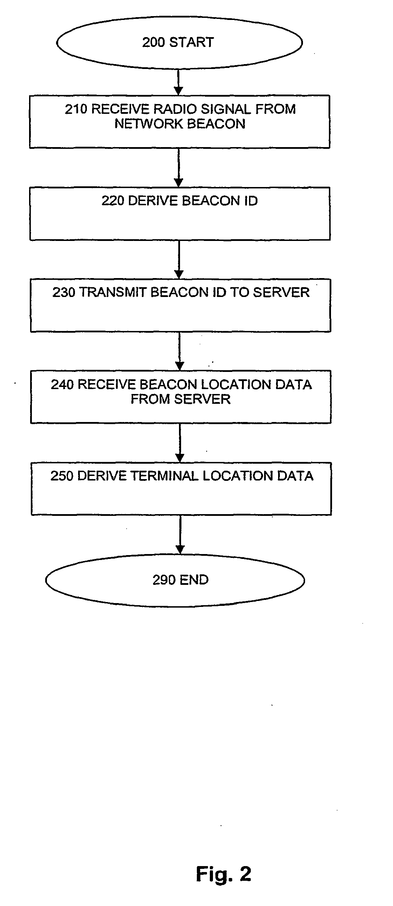

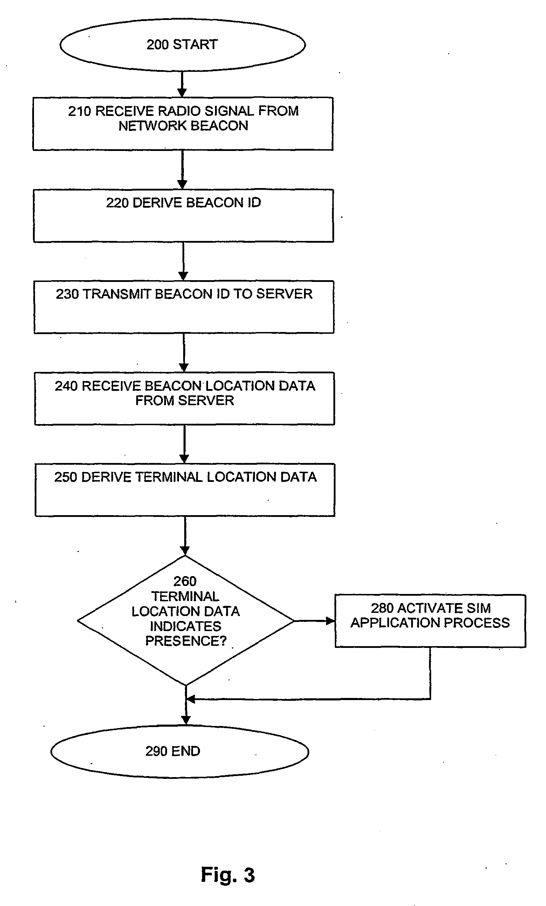

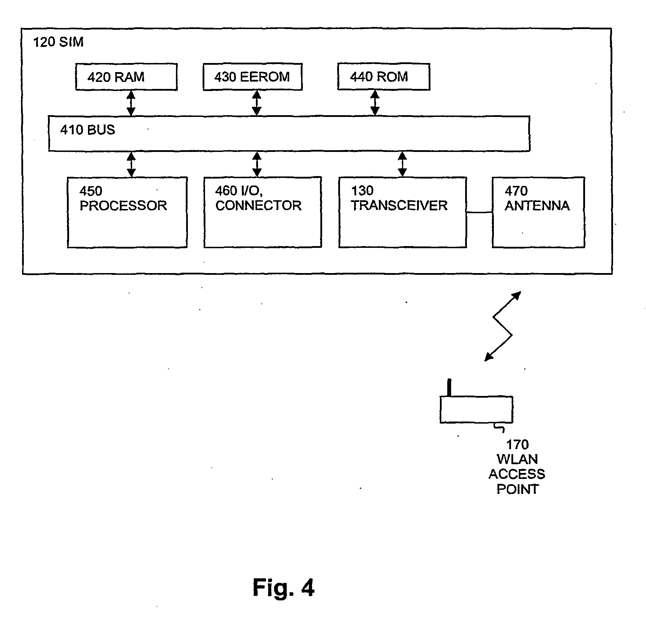

The mobile communication terminal 100 also comprises a subscriber identity module (SIM) 120 which includes a processing device (see also fig. 4), which in turn is configured to operate according to the present invention, particularly according to a method as disclosed with reference to one of the figures 2 or 3 below.

The SIM 120 further comprises a radio transceiver 130, operatively connected to an antenna (cf. also fig. 4). The antenna and the transceiver 130 are arranged to operate in conjunction with the beacon 170 in a wireless local area network. More specifically, the beacon 170 is advantageously a WLAN (IEEE 802.11x) access point, and the radio transceiver 130 is advantageously a WLAN (IEEE 802.11x) transceiver.

The SIM 120 is further described with reference to fig. 4 below.

Although only the mobile communication module 110 and the SIM 120 are specifically shown in fig. 1, the skilled person will readily realize that the mobile communication terminal 100 also includes other regular components of a mobile communication terminal, such as a processor, a memory, a keyboard, a display, an audio module which includes a microphone and a speaker, etc. Although not expressly illustrated in fig. 1, the mobile communication module 110 and the SIM 120 are operatively interconnected.

Fig. 2 is a schematic flowchart illustrating a method according to a first embodiment of the invention.

Basically, the flowchart shows a method for providing mobile communication terminal location data. The steps of the method are executed by a processing device in a subscriber identity module which is included in the mobile communication terminal. For the purpose of illustration, the method is described for use in the system illustrated in fig. 1, i.e. the method is performed by the processing device in the SIM 120 in the mobile communication terminal 100.

The method starts at the initial step 200. The method is initiated by a user operation or by receiving an activating signal through the mobile communication network.

First in the method, the processing device in the subscriber identity module 120 performs the beacon signal receiving step 210, wherein a radio signal is received from the beacon 170 in a wireless local area network. In the preferred embodiment, the beacon 170 is a IEEE 802.11 (Wi-Fi) WLAN access point, i.e. a wireless networks device that connects wireless communication and computer devices together in order to provide a wireless local area network. In particular, the radio signal is received by means of an antenna included in the subscriber identity module.

Next, in the identification data deriving step 220, identification data that identifies the beacon 170 is derived, based on the received radio signal. Advantageously, the identification data is a MAC address associated with the beacon, and which is included in, and derivable from, the radio signal transmitted by the beacon 170. A MAC address (Media Access Control address) is a unique identifier associated with a wireless network device, e.g. as prescribed by the IEEE 802.11 specification.

Advantageously, additional data is also derived from the received radio signal. The additional data advantageously comprises the signal strength of the signal received from the beacon 170.

Typically, a plurality of signals are received from various beacons 170 at the same time. The signal strength is then advantageously used for selecting the most pronounced beacon 170 as the most relevant candidate for estimating the position of the mobile communication terminal.

Alternatively, when signal strength is derived from signals from three or more distinct beacons, the signal strength values are used for estimating the position of the mobile communication terminal more accurately, by using weighted triangulation approach based on the signal strength values. The calculations necessary to obtain this position estimate are advantageously performed in the SIM processor, or alternatively by a central processing unit in a server.

Next, in the identification data transmitting step 230, the identification data is transmitted to the server 160.

Advantageously, the mobile communication module 110 included in the mobile communication terminal is used in the transmitting step 230. More specifically, the identification data is transmitted by means of a message, such as an SMS or more preferably a hidden SMS, or alternatively as a request command transmitted by a GPRS connection through the mobile communication network 190.

As explained with reference to fig. 1 above, the server 160 is arranged for providing beacon location data, based on the beacon identification data, and for transmitting such data back to the requesting mobile communication terminal.

Next, in the location data receiving step 240, beacon location data that represents the location of the beacon 170 is received from the server 160.

Next, in the terminal location data deriving step 250, mobile communication terminal location data is derived, based on the beacon location data.

Advantageously, the calculations necessary in this location deriving step are performed by a processor embedded on the SIM module, particularly the SIM processor 450 (cf. fig. 4). Alternatively, the calculations are performed by an external server.

If an external server is used, or if the SIM processor allows for more resource demanding computing capabilities, more sophisticated and methods may be used for enhancing the location deriving step. Such methods include the use of map databases, Kalman filtering, calculations involving historical data, etc.

Advantageously, the step 250 of deriving the mobile communication terminal location data based on the beacon location data comprises deriving presence data that indicates that the mobile communication terminal is in the vicinity of the beacon 170.

In order to determine such presence, at least two methods may be applied:

Advantageously, a centrally performed application, e.g. on a server, activates a position "sniffing" on the SIM. The SIM responds by submitting its position (e.g., in terms of detected WLAN MAC addresses) to the requesting server. The server will then compute actual positions and determine the corresponding acts to be performed.

Alternatively, a central application, e.g. on a server, activates a position "sniffing" on the SIM card. The server also transfers data that indicates one or more positions (e.g., in terms of corresponding WLAN MAC addresses), to which the SIM shall respond.

The process illustrated in fig. 2 terminates at the terminating step 290.

Fig. 3 is a schematic flowchart illustrating a method according to a second embodiment of the invention.

The process illustrated in fig. 3 mainly corresponds to the process illustrated in fig. 2.

However, in the second embodiment illustrated in fig. 3, the terminal location data deriving step 250 is followed by the presence test step 260, wherein it is determined if the presence data derived in step 250 indicates that the mobile communication terminal 100 is in the vicinity of the beacon 170 in the wireless local area network.

If this test is not true, the process continues at the terminating step 290.

If the test is true, the process continues at the application activating process 280, wherein an additional application process is activated for execution by the processing device in the subscriber identity module.

The additional application process may, e.g., be a process included in a guiding or information service. For instance, if the system according to the invention is used in museum premises, various attractions in the museum may be associated with WLAN beacons each arranged at the respective attractions. A mobile communication terminal with a SIM card in accordance with the invention may be operated by a museum visitor. The mobile communication terminal will then be able to detect its presence to each beacon, and this detected presence will in turn trigger a guiding application in the mobile communication terminal, providing further information to the museum visitor. Since the method is performed by the subscriber identity module, most of the process may be hidden to the museum visitor, except from the presentation of relevant information about the museum attraction.

Next, the process continues at the terminating step 290.

Fig. 4 is a schematic block diagram illustrating a subscriber identity module in accordance with the invention.

The subscriber identity module (SIM) 120 is implemented as a smart card, comprising an internal bus 410 which interconnects a processor 450, memory circuits 420, 430, 440, an input/output circuit 460, and a transceiver 130.

The radio transceiver 130 is operatively connected to the antenna 470, which is included in the SIM card 120. The transceiver 130 and the antenna 470 are arranged to operate in conjunction with a WLAN beacon 170. To this end, the transceiver 130 and the antenna 170 are advantageously arranged to transmit and receive in accordance with the WLAN (IEEE 802.11x) specification.

The memory circuits typically comprise a volatile memory 420 such as a RAM, a semi-volatile memory 430 such as a Flash memory or an EEPROM, and a non-volatile memory 440 such as a ROM. The input/output circuit 460 comprises an electrical connection to the remaining components of the mobile communication terminal 100 (cf. fig. 1).

Advantageously, the hardware configuration of the SIM is implemented in accordance with the UICC specification, i.e. as a 25 x 15 mm card for insertion into a standardized slot in a mobile communication terminal. The SIM cars's compliance with a standard specification enables a subscriber easily to move his/her mobile telephone subscription, and the corresponding telephone number, from one mobile communication terminal to another.

The memory, in particular the non-volatile memory 440 and/or the semi-volatile memory 430, includes processor instructions which form a logical application for execution by the processor 450. In particular, the processor instructions are configured to enable the SIM to perform a method according to the present invention, e.g., a method as disclosed above with reference to fig. 2 or fig. 3.

In addition, processor instructions contained in the SIM memories provide regular SIM functions, i.e. functions for secure storage of subscription information, storage of configuration data (e.g., preferences), storage of text messages, etc.

The invention has been described above with reference to museum guiding as an exemplary use. The skilled person will realize that many other use areas are possible, such as a payment application, wherein a payment transaction may be triggered upon the detection of a certain position of the mobile communication terminal, e.g. when the mobile communication terminal is determined to be located in the vicinity of a point of sale terminal, such as a cash register.

Another, particular scenario for use of the invention is an emergency situation, wherein beacon location data may be automatically acquired by the mobile communication terminal and forwarded to an adequate addressee in the case of an emergency call from the mobile communication terminal 100.

The above detailed description has explained the invention by way of example. A person skilled in the art will realize that numerous variations and alternatives to the detailed embodiment exist within the scope of the invention, as set forth by the appended claims.

For instance, the basic features of the invention could also be achieved by replacing the transceiver 130 in the SIM by a receiver, i.e. a transceiver without transmitting capabilities.

Moreover, although the transceiver 130 in the SIM has been specified as a IEEE 802.11 WLAN transceiver and the beacon 170 has accordingly been specified as a corresponding WLAN access point, the skilled person will readily realize that the invention could also be implemented using wireless communication at other frequencies or with different protocols, such as radio communication in accordance with the Bluetooth specification.

The SIM module has been illustrated as including one processing unit. It should be appreciated that a multiprocessor approach is also possible within the concept of the invention.

## Claims

1. Method for providing mobile communication terminal location data for a mobile communication terminal (100), the method comprising the steps of:
- receiving (210) a radio signal from a beacon (170) in a wireless local area network,
- deriving (220) beacon identification data identifying the beacon (170), based on the received radio signal,
- transmitting (230) the identification data to a server (160),
- receiving (240) from the server (160) beacon location data representing the location of the beacon, and
- deriving (250) mobile communication terminal location data, based on the beacon location data,
**characterized in that** the method is executed by a processing device in a subscriber identity module (120) included in the mobile communication terminal.

2. Method according to claim 1,
wherein the step (210) of receiving a radio signal includes the use of an antenna included in the subscriber identity module (120).

3. Method according to one of the claims 1 or 2,
wherein the step of transmitting (230) the identification data to the server (160) comprises operating a mobile communication module (110) included in the mobile communication terminal (100).

4. Method according to one of the claims 1-3,
wherein the step (220) of deriving the mobile communication terminal location data based on the beacon location data comprises deriving presence data that indicates that the mobile communication terminal (100) is in the vicinity of the beacon (170 in the wireless local area network.

5. Method according to claim 4,
further comprising the step (280) of activating an additional application process for execution by the subscriber identity module (120) if the presence data indicate that the mobile communication terminal is in the vicinity of the beacon in the wireless local area network.

6. Subscriber identity module (120) for use in a mobile communication terminal (100), the subscriber identity module comprising a processing device, **characterized in that** the processing device in the subscriber identity module (120) is configured to execute the following method steps:
- receiving (210) a radio signal from a beacon (170) in a wireless local area network,
- deriving (220) beacon identification data identifying the beacon (170), based on the received radio signal,
- transmitting (230) the identification data to a server (160),
- receiving (240) from the server (160) beacon location data representing the location of the beacon (170), and
- deriving (250) the mobile communication terminal location data, based on the beacon location data.

7. Subscriber identity module according to claim 6,
wherein the step (210) of receiving a radio signal includes the use of an antenna included in the subscriber identity module (120).

8. Subscriber identity module according to one of the claims 6 or 7,
wherein the step (230) of transmitting the identification data to the server (160) comprises operating a mobile communication module (110) included in the mobile communication terminal (100).

9. Subscriber identity module according to one of the claims 6-8,
wherein the step (250) of deriving the mobile communication terminal location data based on the beacon location data comprises deriving presence data that indicates that the mobile communication terminal (100) is in the vicinity of the beacon (170) in the wireless local area network.

10. Subscriber identity module according to claim 9,
wherein the processing device in the subscriber identity module (120) is further configured to execute the step (280) of activating an additional application process for execution by the subscriber identity module (120) if the presence data indicate that the mobile communication terminal (100) is in the vicinity of the beacon (170) in the wireless local area network.

11. System for providing mobile communication terminal location data, the system comprising
- a mobile communication network (190), including a base station (180),
- a wireless local area network, including a beacon (170),
- a server (160), operatively connected to the mobile communication network 190, arranged for providing beacon location data based on a request including beacon identification data, and
- a mobile communication terminal (100) which includes
-- a mobile communication module (110) arranged to communicate with the base station (180) in the mobile communication network (190),
the mobile communication terminal being configured to perform the following method steps:
- receiving (210) a radio signal from the beacon (170) in the wireless local area network,
- deriving (220) beacon identification data identifying the beacon (170), based on the received radio signal,
- transmitting (230) the identification data to the server (160),
- receiving (240) from the server (160) beacon location data representing the location of the beacon (170), and
- deriving (250) the mobile communication terminal location data, based on the beacon location data,
**characterized in that** said method steps are executed by a processing device in a subscriber identity module (120) included in the mobile communication terminal (100).

12. System according to claim 11,
wherein the step (210) of receiving a radio signal includes the use of an antenna included in the subscriber identity module (120).

13. System according to one of the claims 11 or 12,
wherein the step (230) of transmitting the identification data to the server (160) comprises operating a mobile communication module (110) included in the mobile communication terminal (100).

14. System according to one of the claims 11-13,
wherein the step (220) of deriving the mobile communication terminal location data based on the beacon location data comprises deriving presence data that indicates that the mobile communication terminal (100) is in the vicinity of the beacon(170) in the wireless local area network.

15. System according to claim 14,
wherein the processing device in the subscriber identity module (120) is further configured to execute the step (280) of activating an additional application process for execution by the subscriber identity module (120) if the presence data indicate that the mobile communication terminal (100) is in the vicinity of the beacon (170) in the wireless local area network.

## Patentansprüche

1. Verfahren zum Bereitstellen von Mobilkommunikations-Endgerät-Ortsdaten für ein Mobilkommunikations-Endgerät (100), wobei das Verfahren folgende Schritte aufweist:
- Empfangen (210) eines Funksignals von einem Funksignalsender (170) in einem drahtlosen lokalen Netzwerk,
- Ableiten (220) von Funksignalsender-Identifikationsdaten, die den Funksignalsender (170) identifizieren, auf der Basis des empfangenen Funksignals,
- Senden (230) der Identifikationsdaten zu einem Server (160),
- Empfangen (240) von Funksignalsender-Ortsdaten, die den Ort des Funksignalsenders repräsentieren, von dem Server (160), und
- Ableiten (250) von Mobilkommunikations-Endgerät-Ortsdaten auf der Basis der Funksignalsender-Ortsdaten,
**dadurch gekennzeichnet,**
**daß** das Verfahren von einer Verarbeitungsvorrichtung in einem Teilnehmer-Identitätsmodul (120) ausgeführt wird, das in dem Mobilkommunikations-Endgerät enthalten ist.

2. Verfahren nach Anspruch 1,
wobei der Schritt (210) des Empfangens eines Funksignals die Verwendung einer Antenne beinhaltet, die in dem Teilnehmer-Identitätsmodul (120) enthalten ist.

3. Verfahren nach Anspruch 1 oder 2,
wobei der Schritt des Sendens (230) der Identifikationsdaten zu dem Server (160) das Betreiben eines Mobilkommunikationsmoduls (110) beinhaltet, das in dem Mobilkommunikations-Endgerät (100) enthalten ist.

4. Verfahren nach einem der Ansprüche 1 bis 3,
wobei der Schritt (220) des Ableitens der Mobilkommunikations-Endgerät-Ortsdaten auf der Basis der Funksignalsender-Ortdaten das Ableiten von Präsenzdaten beinhaltet, die anzeigen, daß sich das Mobilkommunikations-Endgerät (100) in der Nähe des Funksignalsenders (170) in dem drahtlosen lokalen Netzwerk befindet.

5. Verfahren nach Anspruch 4,
wobei das Verfahren weiterhin den Schritt (280) aufweist, in dem ein zusätzlicher Anwendungsprozeß zur Ausführung durch das Teilnehmer-Identitätsmodul (120) aktiviert wird, wenn die Präsenzdaten anzeigen, daß sich das Mobilkommunikations-Endgerät in der Nähe des Funksignalsenders in dem drahtlosen lokalen Netzwerk befindet.

6. Teilnehmer-Identitätsmodul (120) zur Verwendung in einem Mobilkommunikations-Endgerät (100), wobei das Teilnehmer-Identitätsmodul eine Verarbeitungsvorrichtung aufweist,
**dadurch gekennzeichnet,**
**daß** die Verarbeitungsvorrichtung in dem Teilnehmer-Identitätsmodul (120) dafür konfiguriert ist, die folgenden Verfahrensschritte auszuführen:
- Empfangen (210) eines Funksignals von einem Funksignalsender (170) in einem drahtlosen lokalen Netzwerk,
- Ableiten (220) von Funksignalsender-Identifikationsdaten, die den Funksignalsender (170) identifizieren, auf der Basis des empfangenen Funksignals,
- Senden (230) der Identifikationsdaten zu einem Server (160),
- Empfangen (240) von Funksignalsender-Ortsdaten, die den Ort des Funksignalsenders (170) repräsentieren, von dem Server (160), und
- Ableiten (250) von Mobilkommumkations-Endgerät-Ortsdaten auf der Basis der Funksignalsender-Ortsdaten.

7. Teilnehmer-Identitätsmodul nach Anspruch 6,
wobei der Schritt (210) des Empfangens eines Funksignals die Verwendung einer Antenne beinhaltet, die in dem Teilnehmer-Identitätsmodul (120) enthalten ist.

8. Teilnehmer-Identitätsmodul nach einem der Ansprüche 6 oder 7,
wobei der Schritt (230) des Sendens der Identifikationsdaten zu dem Server (160) das Betreiben eines Mobilkommunikationsmoduls (110) beinhaltet, das in dem Mobilkommunikations-Endgerät (100) enthalten ist.

9. Teilnehmer-Identitätsmodul nach einem der Ansprüche 6 bis 8,
wobei der Schritt (250) des Ableitens der Mobilkommunikations-Endgerät-Ortsdaten auf der Basis der Funksignalsender-Ortdaten das Ableiten von Präsenzdaten beinhalten, die anzeigen, daß sich das Mobilkomnunikations-Endgerät (100) in der Nähe des Funksignalsenders (170) in dem drahtlosen lokalen Netzwerk befindet.

10. Teilnehmer-Identitätsmodul nach Anspruch 9,
wobei die Verarbeitungsvorrichtung in dem Teilnehmer-Identitätsmodul (120) ferner dafür konfiguriert ist, den Schritt (280) auszuführen, in dem ein zusätzlicher Anwendungsprozeß zur Ausführung durch das Teilnehmer-Identitätsmodul (120) aktiviert wird, wenn die Präsenzdaten anzeigen, daß sich das Mobilkommunikations-Endgerät (100) in der Nähe des Funksignalsenders (170) in dem drahtlosen lokalen Netzwerk befindet.

11. System zum Bereitstellen von Mobilkommunikations-Endgerät-Ortsdaten, wobei das System folgendes aufweist:
- ein Mobilkommunikations-Netzwerk (190), das eine Basisstation (180) beinhaltet,
- ein drahtlose lokales Netzwerk, das einen Funksignalsender (170) beinhaltet,
- einen Server (160), der mit dem Mobilkommunikations-Netzwerk (190) betriebsmäßig verbunden ist und dazu ausgebildet ist, Funksignalsender-Ortdaten auf der Basis einer Anforderung bereitzustellen, die Funksignalsender-Identifikationsdaten beinhaltet, und
- ein Mobilkommunikations-Endgerät (100), das
-- ein Mobilkommunikationsmodul (110) beinhaltet, das dazu ausgebildet ist, mit der Basisstation (180) in dem Mobilkommunikations-Netzwerk (190) zu kommunizieren,
wobei das Mobilkommunikations-Endgerät dafür konfiguriert ist, die folgenden Verfahrensschritte auszuführen:
- Empfangen (210) eines Funksignals von den Funksignalsender (170) in dem drahtlosen lokalen Netzwerk,
- Ableiten (220) von Funksignalsender-Identifikationsdaten, die den Funksignalsender (170) identifizieren, auf der Basis des empfangenen Funksignals,
- Senden (230) der Identifikationsdaten zu dem Server (160),
- Empfangen (240) von Funksignalsender-Ortsdaten, die den Ort des Funksignalsenders (170) repräsentieren, von dem Server (160), und
- Ableiten (250) von Mobilkommunikations-Endgerät-Ortsdaten auf der Basis der Funksignalsender-Ortsdaten,
**dadurch gekennzeichnet,**
**daß** die Verfahrensschritte von einer Verarbeitungsvorrichtung in einem Teilnehmer-Identitätsmodul (120) ausgeführt werden, das in dem Mobilkommumkations-Bndgerät (100) enthalten ist.

12. System nach Anspruch 11,
wobei der Schritt (210) des Empfangenes eines Funksignals die Verwendung einer Antenne beinhaltet, die in dem Teilnehmer-Identitätsmodul (120) enthalten ist.

13. System nach einem der Ansprüche 11 oder 12,
wobei der Schritt (230) des Sendens der Identifikationsdaten zu dem Server (160) das Betreiben eines Mobilkommunikationsmoduls (110) beinhaltet, das in dem Mobilkommunikations-Endgerät (100) enthalten ist.

14. System nach einem der Ansprüche 1 bis 13,
wobei der Schritt (220) des Ableitens der Mobilkommunikations-Endgerät-Ortsdaten auf der Basis der Funksignalsender-Ortdaten das Ableiten von Präsenzdaten beinhalten, die anzeigen, daß sich das Mobilkomnunikations-Endgerät (100) in der Nähe des Funksignalsenders (170) in dem drahtlosen lokalen Netzwerk befindet.

15. System nach Anspruch 14,
wobei die Verarbeitungsvorrichtung in dem Teilnehmer-Identitätsmodul (120) ferner dafür konfiguriert ist, den Schritt (280) auszuführen, in dem ein zusätzlicher Anwendungsprozeß zur Ausführung durch das Teilnehmer-Identitätsmodul (120) aktiviert wird, wenn die Präsenzdaten anzeigen, daß sich das Mobilkommunikations-Endgerät (100) in der Nähe des Funksignalsenders (170) in dem drahtlosen lokalen Netzwerk befindet.

## Revendications

1. Procédé pour fournir des données de position de terminal de communication mobile pour un terminal de communication mobile (100), le procédé comprenant les étapes consistant à :
■ recevoir (210) un signal radio d'une balise (170) dans un réseau local sans fil,
■ déduire (220) des données d'identification de balise identifiant la balise (170), sur la base du signal radio reçu,
■ transmettre (230) les données d'identification à un serveur (160),
■ recevoir (240) du serveur (160) des données de position de balise représentant l'emplacement de la balise, et
■ déduire (250) des données de position de terminal de communication mobile, sur la base des données de position de balise,
**caractérisé en ce que** le procédé est exécuté par un dispositif de traitement dans un module d'identité d'abonné (120) inclus dans le terminal de communication mobile.

2. Procédé selon la revendication 1, dans lequel l'étape (210) de réception d'un signal radio comprend l'utilisation d'une antenne incluse dans le module d'identité d'abonné (120).

3. Procédé selon l'une des revendications 1 et 2, dans lequel l'étape de transmission (230) des données d'identification au serveur (160) comprend la mise en oeuvre d'un module de communication mobile (110) inclus dans le terminal de communication mobile (100).

4. Procédé selon l'une des revendications 1 à 3, dans lequel l'étape (220) de déduction des données de position de terminal de communication mobile sur la base des données de position de balise comprend la déduction de données de présence qui indiquent que le terminal de communication mobile (100) est dans le voisinage de la balise (170) dans le réseau local sans fil.

5. Procédé selon la revendication 4, comprenant en outre l'étape (280) d'activation d'un processus d'application supplémentaire pour exécution par le module d'identité d'abonné (120) si les données de présence indiquent que le terminal de communication mobile est dans le voisinage de la balise dans le réseau local sans fil.

6. Module d'identité d'abonné (120) destiné à être utilisé dans un terminal de communication mobile (100), le module d'identité d'abonné comprenant un dispositif de traitement, **caractérisé en ce que** le dispositif de traitement dans le module d'identité d'abonné (120) est configuré pour exécuter les étapes de procédé suivantes consistant à :
■ recevoir (210) un signal radio d'une balise (170) dans un réseau local sans fil,
■ déduire (220) des données d'identification de balise identifiant la balise (170), sur la base du signal radio reçu,
■ transmettre (230) les données d'identification à un serveur (160),
■ recevoir (240) du serveur (160) des données de position de balise représentant l'emplacement de la balise (170), et
■ déduire (250) les données de position de terminal de communication mobile, sur la base des données de position de balise.

7. Module d'identité d'abonné selon la revendication 6, dans lequel l'étape (210) de réception d'un signal radio comprend l'utilisation d'une antenne incluse dans le module d'identité d'abonné (120).

8. Module d'identité d'abonné selon l'une des revendications 6 et 7, dans lequel l'étape (230) de transmission des données d'identification au serveur (160) comprend la mise en oeuvre d'un module de communication mobile (110) inclus dans le terminal de communication mobile (100).

9. Module d'identité d'abonné selon l'une des revendications 6 à 8, dans lequel l'étape (250) de déduction des données de position de terminal de communication mobile sur la base des données de position de balise comprend la déduction de données de présence qui indiquent que le terminal de communication mobile (100) est dans le voisinage de la balise (170) dans le réseau local sans fil.

10. Module d'identité d'abonné selon la revendication 9, dans lequel le dispositif de traitement dans le module d'identité d'abonné (120) est en outre configuré pour exécuter l'étape (280) d'activation d'un processus d'application supplémentaire pour exécution par le module d'identité d'abonné (120) si les données de présence indiquent que le terminal de communication mobile (100) est dans le voisinage de la balise (170) dans le réseau local sans fil.

11. Système pour fournir des données de position de terminal de communication mobile, le système comprenant :
■ un réseau de communication mobile (190), comprenant une station de base (180),
■ un réseau local sans fil, comprenant une balise (170),
■ un serveur (160), connecté de manière fonctionnelle au réseau de communication mobile (190), agencé pour fournir des données de position de balise sur la base d'une demande comprenant des données d'identification de balise, et
■ un terminal de communication mobile (100) qui comprend :
■ un module de communication mobile (110) agencé pour communiquer avec la station de base (180) dans le réseau de communication mobile (190), le terminal de communication mobile étant configuré pour effectuer les étapes de procédé suivantes consistant à :
■ recevoir (210) un signal radio de la balise (170) dans le réseau local sans fil,
■ déduire (220) des données d'identification de balise identifiant la balise (170), sur la base du signal radio reçu,
■ transmettre (230) les données d'identification au serveur (160),
■ recevoir (240) du serveur (160) des données de position de balise représentant l'emplacement de la balise (170), et
■ déduire (250) les données de position de terminal de communication mobile, sur la base des données de position de balise,
**caractérisé en ce que** lesdites étapes de procédé sont exécutées par un dispositif de traitement dans un module d'identité d'abonné (120) inclus dans le terminal de communication mobile (100).

12. Système selon la revendication 11, dans lequel l'étape (210) de réception d'un signal radio comprend l'utilisation d'une antenne incluse dans le module d'identité d'abonné (120).

13. Système selon l'une des revendications 11 et 12, dans lequel l'étape (230) de transmission des données d'identification au serveur (160) comprend la mise en oeuvre d'un module de communication mobile (110) inclus dans le terminal de communication mobile (100).

14. Système selon l'une des revendications 11 à 13, dans lequel l'étape (220) de déduction des données de position de terminal de communication mobile sur la base des données de position de balise comprend la déduction de données de présence qui indiquent que le terminal de communication mobile (100) est dans le voisinage de la balise (170) dans le réseau local sans fil.

15. Système selon la revendication 14, dans lequel le dispositif de traitement dans le module d'identité d'abonné (120) est en outre configuré pour exécuter l'étape (280) d'activation d'un processus d'application supplémentaire pour exécution par le module d'identité d'abonné (120) si les données de présence indiquent que le terminal de communication mobile (100) est dans le voisinage de la balise (170) dans le réseau local sans fil.
